# EUROPEAN PATENT SPECIFICATION

(11) **EP 3 694 738 B1**
(45) Date of publication and mention of the grant of the patent: **15.10.2025**
(21) Application number: 18779530.7
(22) Date of filing: 12.09.2018
(51) Int. Cl.: B60K 35/00, G06F 13/14, B60K 35/21, B60K 35/22, B60K 35/26, B60K 35/28, B60K 35/29, B60K 35/80, B60K 35/81, B60K 35/85, B60K 37/00, G06F 3/14

(54) **ALTERNATIVE DISPLAY OPTIONS FOR VEHICLE TELLTALES**
ALTERNATIVE ANZEIGEOPTIONEN FÜR FAHRZEUGWARNGERÄTE
VARIANTES D'OPTIONS D'AFFICHAGE POUR DES VOYANTS DE VÉHICULE

(30) Priority: 12.10.2017 US 201762571572 P; 11.09.2018 US 201816127504
(43) Date of publication of application: 19.08.2020
(73) Proprietor: Qualcomm Incorporated, San Diego, CA 92121-1714 (US)
(72) Inventor: CHU, Jeffrey, Hao, San Diego California 92121 (US); GULATI, Rahul, San Diego California 92121 (US); HARDACKER, Robert, San Diego California 92121 (US); JONG, Alex, San Diego California 92121 (US); KAKOEE, Reza, San Diego California 92121 (US); KATIBIAN, Behnam, San Diego California 92121 (US)
(74) Representative: Tomkins & Co
(86) International application number: PCT/US2018/050644
(87) International publication number: WO 2019/074605

(56) References cited:
- FR-A1- 3 024 850
- JP-A- S6 048 085
- US-B2- 9 592 734

## Description

### PRIORITY CLAIMS

The present application claims priority to U.S. Provisional Patent Application Serial No. 62/571,572 filed on October 12, 2017 and entitled "ALTERNATIVE DISPLAY OPTIONS FOR VEHICLE TELLTALES".

The present application also claims priority to U.S. Patent Application Serial No. 16/127,504 filed on September 11, 2018 and entitled "ALTERNATIVE DISPLAY OPTIONS FOR VEHICLE TELLTALES".

### BACKGROUND

The present invention relates generally to displays in vehicles.

### II. Background

Current generations of automobiles rely heavily on computers and sensors to evaluate the general "health" and operation of the automobile. While sensors and gauges have existed in automobiles for many years allowing operators to know fuel levels, speed, engine temperature, battery level, and the like, the days of analog gauges are fading, and now such information is digitized and presented to an operator through a display. The display may be a simple backlit image or a video capable display or some combination of the two. Sensors may register faults or conditions and store data related to such faults or conditions in a memory device. Concurrently, information related to the fault or condition may be presented to the operator through the use of a telltale. Typically such telltales are provided on a display in the dashboard, where the display is in line with the steering wheel so that an operator may readily perceive the telltale. The operator may act on the telltale after recognizing the condition. In some instances, the memory device may be accessed through a diagnostic device to receive further information about the condition which triggered the telltale.

Currently, telltales have a failsafe operation profile. That is, the sensors are made as robust as possible to operate in any reasonably expected environmental or driving conditions, and the communication links are protected from such as well. Despite these precautions, failures do occur. Such failures may be as simple as a blown fuse, a burnt out light bulb, or the like. However, such failures may also be related to the communication link, the display, the sensor, or other point of failure. Currently, when such a failure occurs, the operator may be unaware of the failure, and more importantly, may be unaware of any condition which would otherwise be reported through such a failed telltale. Accordingly, there may be opportunities to improve the ability to present telltales to operators. FR 3024850 describes a display device with management. US 9 592 734 describes a cluster information output for apparatus for a vehicle.

### SUMMARY

Aspects of the present invention include alternative display options for vehicle telltales. In an exemplary aspect, a fault condition in a telltale is detected, and the telltale is presented through a secondary display system in the vehicle, potentially bypassing any local control unit for the secondary display system. For example, a video telltale may be presented on an infotainment display after detection of a fault in the original telltale. By presenting the telltale in an alternate display, the operator remains informed of sensor conditions in the automobile and may take remedial action to fix the fault as well as any conditions which trigger a telltale.

In this regard in one aspect of the present invention, a method for controlling displays in a vehicle is disclosed. The method includes sending data from a first controller to a cluster display embedded control unit (ECU) of a vehicle for display on a cluster display within the cluster display ECU. The method also includes sending second data from a second controller to a secondary display. The method also includes detecting a fault associated with the cluster display ECU of the vehicle or a communication path from the first controller to the cluster display ECU. The method also includes sending, from the first controller, cluster display information including at least one telltale to the secondary display in the vehicle without sending the data to the second controller. The method also includes presenting the at least one telltale through the secondary display.

In another aspect, an ECU is disclosed. The ECU includes a vehicle network interface configured to be coupled to a vehicle network. The ECU also includes a first cable interface configured to be coupled to a first cable. The ECU also includes a second cable interface configured to be coupled to a second cable. The ECU also includes a control system including a system on a chip (SoC). The control system is configured to detect a fault in a cluster display ECU through the first cable. The control system is also configured to route cluster display information including a telltale to an infotainment ECU through the second cable.

In another aspect, a method for controlling displays in a vehicle is disclosed. The method includes detecting a fault associated with a cluster display ECU of a vehicle or a communication path from a first controller to the cluster display ECU. The method also includes sending cluster display information including at least one video telltale to a secondary display in the vehicle. The method also includes presenting the at least one video telltale through the secondary display.

In another aspect, an automobile is disclosed. The automobile includes a cluster display ECU. The cluster display ECU includes a cluster display. The cluster display ECU also includes a cluster microcontroller unit (MCU). The cluster display ECU also includes a first cable input configured to receive a first cable. The automobile also includes a second display ECU. The second display ECU includes a second display. The second display ECU also includes a second MCU. The second display also includes a second cable input configured to receive a second cable. The automobile also includes a control system ECU including a control MCU configured to detect a fault in the cluster display ECU and route telltale information to the second display ECU.

### BRIEF DESCRIPTION OF THE FIGURES

Figure 1A is a front elevational view of an exemplary dashboard having a plurality of displays;
Figure 1B is a simplified top down view of a vehicle interior where the vehicle has multiple displays and may be coupled to a mobile terminal;
Figure 2 is a front elevational view of a display having a plurality of exemplary telltales illuminated thereon;
Figure 3 is a block diagram of the plural displays of Figure 1A with associated controllers within a vehicle according to a first exemplary aspect such that each display has a dedicated controller;
Figure 4 is a block diagram of the plural displays of Figure 1A with an associated controller within a vehicle according to a second exemplary aspect where the displays share the associated controller;
Figure 5 is a flowchart illustrating an exemplary process for providing alternative display options for telltales according to the present invention;
Figure 6 is a block diagram of a first possible alternative display option for the system of Figure 3;
Figure 7 is a block diagram of a second possible alternative display option for the system of Figure 3;
Figure 8 is a block diagram of a possible alternative display option for the system of Figure 4; and
Figure 9 is a block diagram of another alternative display option for the system of Figure 4.

### DETAILED DESCRIPTION

Aspects of the present invention include alternative display options for vehicle telltales. In an exemplary aspect, a fault condition in a telltale is detected, and the telltale is presented through a secondary display system in the vehicle, potentially bypassing any local control unit for the secondary display system. For example, a video telltale may be presented on an infotainment display after detection of a fault in the original telltale. By presenting the telltale in an alternate display, the operator remains informed of sensor conditions in the automobile and may take remedial action to fix the fault as well as any conditions which trigger a telltale.

While the features described herein are presented with reference to an automobile, other vehicles such as boats, motorcycles, planes, and the like could also benefit from the described features and the particular environment is not limited to automobiles. However, for simplicity, the following discussion is provided with reference to an automobile.

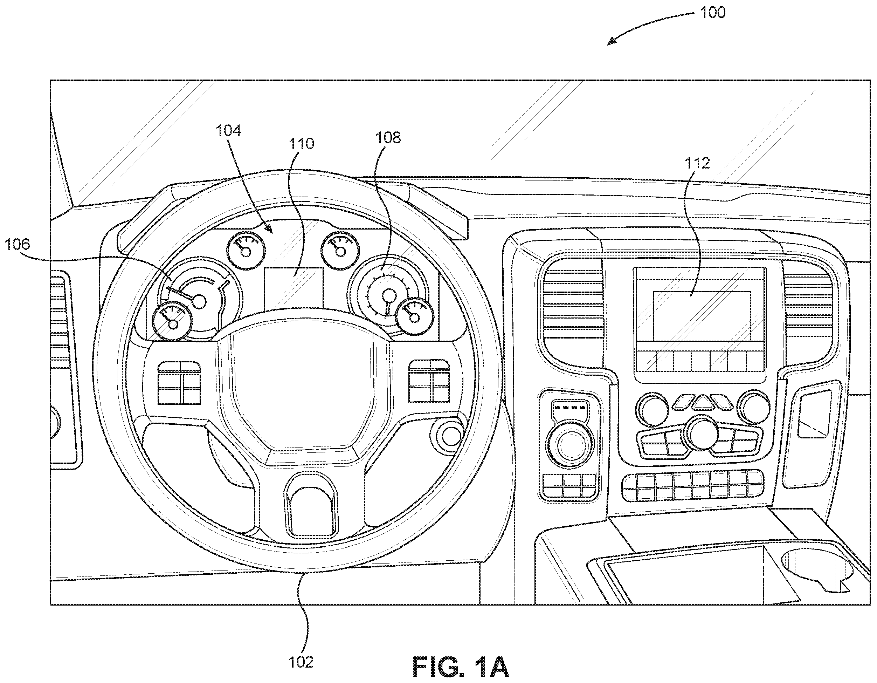

In this regard, Figure 1A is front elevational view of a dashboard 100 of a vehicle. The dashboard 100 includes a steering wheel 102. An instrument cluster display 104 is provided in the dashboard 100 in line with the steering wheel 102. The instrument cluster display 104 may be a liquid crystal display (LCD), a plasma display, or the like, and may include one or more additional analog display components or be broken into fields where different information is provided. For example, a tachometer 106 and a speedometer 108 may be positioned on either side of an LCD display 110. Additional displays such as a fuel gauge, an engine temperature gauge, a battery level gauge, and an oil pressure gauge or the like may be present. The dashboard 100 further includes a second display 112 that may be referred to as a console or infotainment display. The second display 112 may be an LCD, plasma display, touch screen, or the like. In normal use, the second display 112 may provide information about the radio station being played, any further information received from the radio station (e.g., artist name, song name), traffic information, navigation information, climate control information, phone call information if the vehicle is equipped with hands-free phone operations, and the like. Note that these functions may have duplicate control systems. Further, some controls may be present on the steering wheel 102.

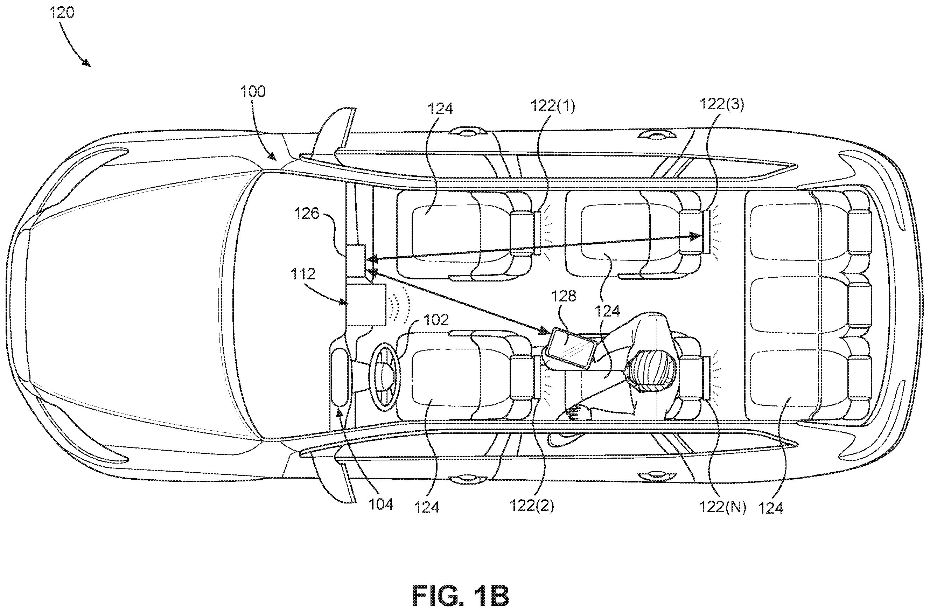

It should be appreciated that many vehicles may have other displays and/or be connected to one or more mobile terminals. In this regard, a vehicle 120 is illustrated in Figure 1B with the dashboard 100 having the displays 104 and 112 therein. Additional seat back displays 122(1)-122(N) may be present. As illustrated, N is four (4), but may be some other number as more or fewer seats 124 include displays. In some cases, the seat back displays 122(1)-122(N) may be hardwired into the audiovisual entertainment system of the vehicle 120. Alternatively, one or more of the seat back displays 122(1)-122(N) may be wirelessly coupled to the audiovisual entertainment system of the vehicle 120 such as through an antenna 126. Additionally, one or more mobile terminals 128 may be brought into the vehicle 120 and may couple to the audiovisual entertainment system of the vehicle 120. As illustrated, the coupling may be wireless through the antenna 126, but may also be through a cable connected to a plug outlet (e.g., a USB port) (not illustrated).

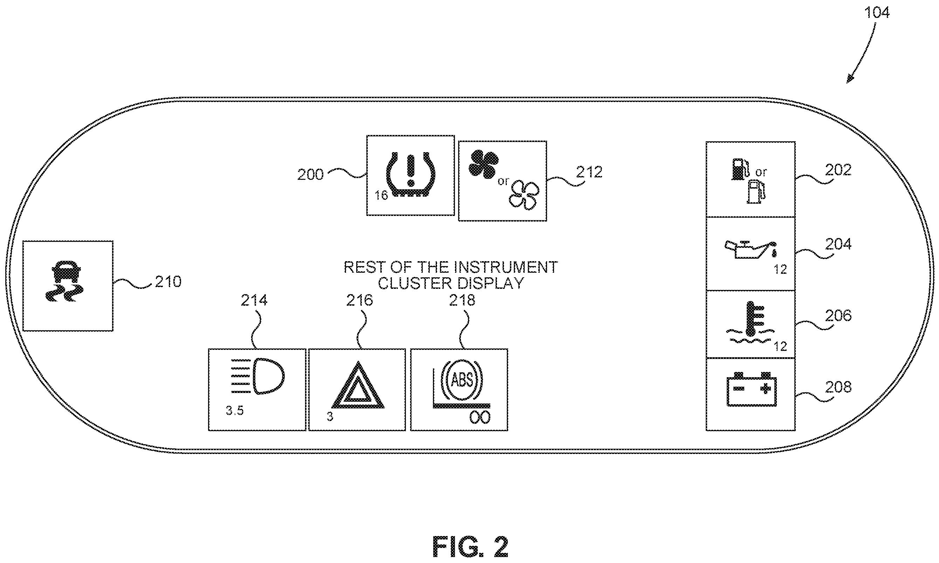

As used herein, a telltale is an indicator of a malfunction of a system within a motor vehicle by an illuminated symbol or text legend. Exemplary telltales are illustrated in the instrument cluster display 104 in Figure 2. Specifically, Figure 2 illustrates a low tire pressure telltale 200, a low fuel telltale 202, an oil pressure telltale 204, a temperature telltale 206, a battery level telltale 208, an electronic stability control telltale 210, a heating/air conditioning fan telltale 212, a bright headlight telltale 214, a hazard light telltale 216, and an antilock brake system telltale 218. It should be appreciated that other telltales may also be used.. Likewise, the precise placement of a telltale in the instrument cluster display 104 is not a central tenant, and different automotive manufacturers may differently arrange the number, type, and placement of telltales.

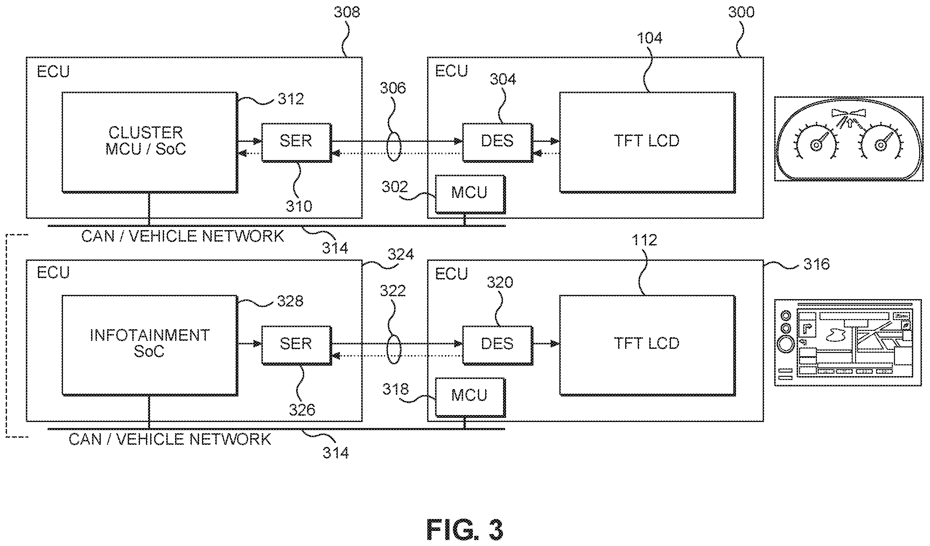

In normal operation, the instrument cluster display 104 is responsive to a local cluster microcontroller unit (MCU), and the second display 112 is responsive to a local infotainment system or second MCU. The local MCUs may communicate with a controller though a cable or through the vehicle network. This arrangement is illustrated with reference to Figure 3. In particular, the instrument cluster display 104 may be positioned in an embedded control unit (ECU) 300. The ECU 300 includes an MCU 302 and a serializer/deserializer 304. Note that while illustrated as a single block, the serializer and deserializer components could be separate elements. The serializer/deserializer 304 primarily deserializes signals from a cable 306, wherein the signals consist of pixel data, horizontal and vertical timing control, and additional information, such as cyclic redundancy check (CRC) information, which will be sent to the instrument cluster display 104. The MCU 302 controls and monitors the components on the ECU 300. The MCU 302 may control tasks such as power up/down sequencing of the display or monitoring the functionality and operation of other components on the ECU 300. The MCU 302 may further be connected to a controller area network (CAN) 314 or other vehicle network. While current designs pass the pixel data/image frame in a raster scan format, telltale state information may be sent or the telltale may be sent in some other format that is processed so as to provide instructions to illuminate a telltale. The serializer/deserializer 304 may send backchannel or status information across the cable 306 to an ECU 308. While this backchannel information is normally serialized, it is possible that the data is already formatted as a single stream of data and the serializer may be omitted.

The ECU 308 may include a serializer/deserializer 310 and a cluster MCU 312. The cluster MCU 312 may sometimes be referred to as a system on a chip (SoC) or application processor (AP). The cluster MCU 312 may further communicate over the CAN 314 or other vehicle network. The serializer/deserializer 310 primarily serializes signals such as pixel data, horizontal and vertical timing control, and additional information, such as CRC information, for transmission over the cable 306 to the ECU 300, but may receive backchannel information from the ECU 300. Part of the backchannel information may include signals that act as a heartbeat signal that can be monitored by the cluster MCU 312 to indicate the data path to the instrument cluster display 104 is operational. Note that this data path includes the serializer/deserializer 310, the cable 306 connecting the ECU 308 and the ECU 300, the serializer/deserializer 304, and the instrument cluster display 104.

Note that the cable 306 may be a coaxial cable, a twisted pair, or the like and generally is configured to carry a differential signal and have sufficient bandwidth to carry video signals specifically. Note further that the CAN 314 may be a bi-directional communication bus and may sometimes be referred to herein as a vehicle network. Current CAN implementations are typically two-wire cables, but it should be appreciated that a vehicle network is not limited to such two-wire cables and the term vehicle network includes CANs, Ethernet-based networks, wireless networks, USB, Peripheral Component Interconnect (PCI) express (PCIE), Converged Input/Output (CIO), and the like with sufficient bandwidth to handle video signals.

With continued reference to Figure 3, the second display 112 may be housed in its own ECU 316 which may have a display MCU 318 and a serializer/deserializer 320. The serializer/deserializer 320 primarily deserializes signals from a cable 322, wherein the signals consist of pixel data, horizontal and vertical timing control, and additional information, such as CRC information, which will be sent to the second display 112. The serializer/deserializer 320 may send backchannel or control information across the cable 322 to an ECU 324. The ECU 324 may include a serializer/deserializer 326 and an infotainment SoC 328. Note that the infotainment SoC 328 is also an MCU, although not labeled as such in the drawings. The infotainment SoC 328 may further communicate over the CAN 314. The serializer/deserializer 326 primarily serializes signals such as pixel data, horizontal and vertical timing control, and additional information, such as CRC information, for transmission over the cable 322 to the ECU 316, but may receive backchannel information from the ECU 316. Part of the backchannel information may include signals that act as a heartbeat signal that can be monitored by the infotainment SoC 328 to indicate the ECU 316 is operational. Alternatively, there may be a specific heartbeat signal, which may be implemented in a variety of ways. The cable 322 may be a coaxial cable, a twisted pair, or the like and generally is configured to carry a differential signal with sufficient bandwidth to convey a video signal.

In practice, the cluster MCU 312 receives reports from sensors about the health and operation of components of the vehicle such as tire pressure, oil pressure, fuel level, and the like. Based on these reports, the cluster MCU 312 may send the display image pixel data or other signal to the instrument cluster display 104 to update the status of one or more telltales on the instrument cluster display 104.

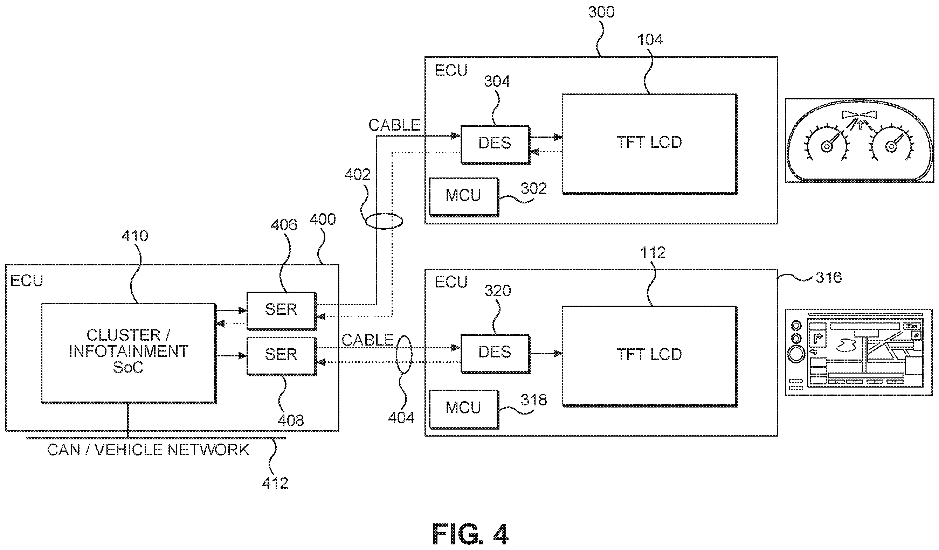

While Figure 3 illustrates a system that has a separate controller for the instrument cluster display 104 and the second display 112, there are other configurations that may exist. For example, as illustrated in Figure 4, a single controller may control the instrument cluster display 104 and the second display 112. In this regard, Figure 4 illustrates a second arrangement where the ECU 300 and the ECU 316 both communicate with a single ECU 400 over a cable 402 and a cable 404, respectively. The ECU 400 includes two serializer/deserializers 406 and 408 for transmitting pixel data or other communication with the ECUs 300 and 316, respectively. The ECU 400 further includes a cluster/infotainment SoC 410. It should be appreciated that the cluster/infotainment SoC 410 is an MCU. The cluster/infotainment SoC 410 may also be coupled to a CAN 412 or other vehicle network to receive signals from sensors and the like.

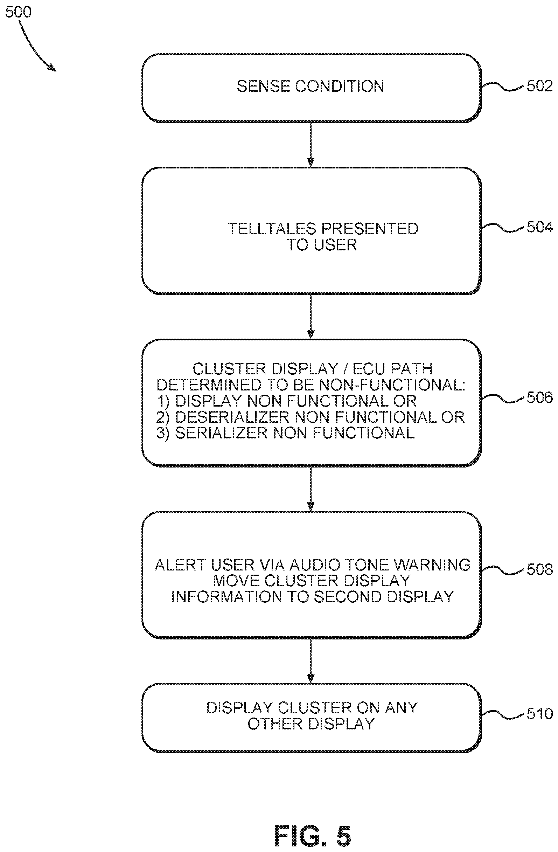

In normal operation, sensors associated with the vehicle monitor environmental and operational conditions and provide input to the cluster SoC 312 (or the cluster/infotainment SoC 410). If there is a telltale update, the cluster SoC 312 (or the cluster/infotainment SoC 410) sends the pixel data to be displayed to the instrument cluster display 104 or otherwise communicates with the MCU 302 to cause illumination of the telltale on the instrument cluster display 104. However, when a fault is present in the pixel data path (or general communication path) to the ECU 300, the instrument cluster display 104 is not updated with the correct telltale state to be observed by the driver/user. Exemplary embodiments recognize the fault in the path to the instrument cluster display 104 and cause the telltale status to be shown on the second display 112 or other secondary display such as the seat back displays 122(1)-122(N) and/or the mobile terminal 128. In some cases the pixel stream is duplicated for the second display 112, but it is also possible that instructions are sent which cause a telltale to appear on the second display 112. Additionally, or alternatively, an audible telltale is provided to the operator. This process is illustrated in Figure 5, where process 500 is set forth.

The process 500 begins with a condition being sensed (block 502) that triggers a telltale. For example, tire pressure may be low in one or more of the tires of the vehicle. In normal operation, the telltales are presented to the user (operator) (block 504). When the instrument cluster display 104 and/or the pixel data path to the instrument cluster display 104 is determined to be non-functional (e.g., as a result of the instrument cluster display 104 being non-functional, the serializer/deserializer 304 being non-functional, or the serializer/deserializer 310 being non-functional) (block 506), a warning, such as an audio tone, may be provided to indicate failure and cluster display information is moved to a secondary display, which may be the second display 112 (block 508), another display within the vehicle such as the backseat displays 122(1)-122(N), and/or the mobile terminal 128. Any of the secondary displays may duplicate the instrument cluster display 104 such that the telltales are presented on this secondary display (block 510). In an alternate aspect, the instrument cluster display 104 may be duplicated on multiple secondary displays. Note that the detection of the non-functionality may be effectuated by loss of the heartbeat signal, detection of corruption, detection of a blown fuse, a line fault error, or other mechanism as needed or desired.

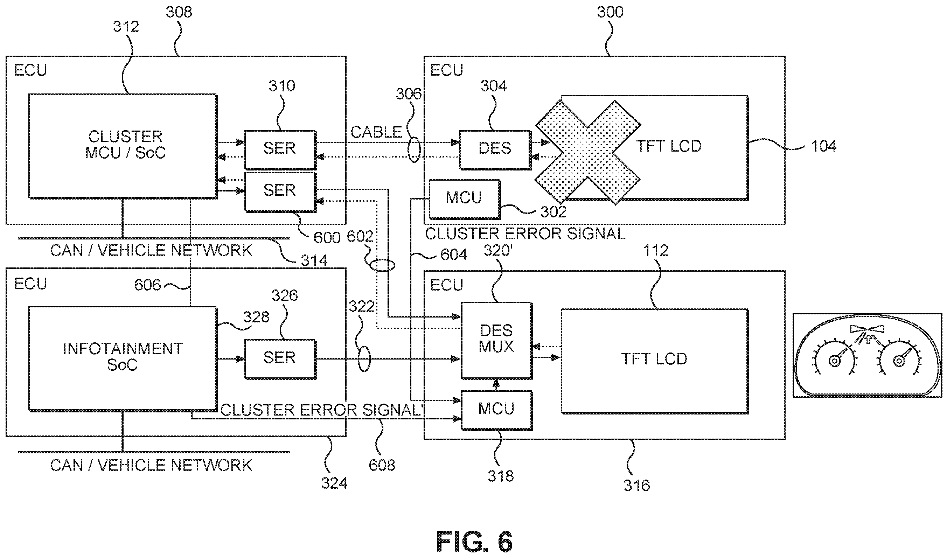

The presentation of the cluster data on the second display 112 is effectuated by providing or broadcasting the data that would be sent to the ECU 300 to the ECU 316 or an ECU controlling the secondary display. This broadcast may be done concurrently such that both the ECU 300 and the ECU 316 receive the data, or the initial data stream to the ECU 300 is terminated. Depending on the whether there is a single SoC controlling both displays (e.g., the cluster/infotainment SoC 410) or two SoCs controlling individual displays (e.g., the cluster SoC 312 and the infotainment SoC 328), there are different ways of sending the information to the ECU 316. Figures 6-9 illustrate a few exemplary ways.

In this regard, Figure 6 illustrates a first exemplary aspect. On detection of a fault in the pixel data path (or communication path) to the instrument cluster display 104, the ECU 308 uses a second serializer/deserializer 600 to send information to a serializer/deserializer 320'. The serializer/deserializer 320' is similar to the serializer/deserializer 320, but has two inputs and acts as a multiplexor that selects between the inputs to provide the display pixel data stream or other instructions to the second display 112. This may add a cable 602 to couple the serializer/deserializer 600 to the serializer/deserializer 320'. Further, the MCU 302 may send an error signal 604 to the MCU 318 so that the MCU 318 is alerted of the new data source. Likewise, the MCU 318 may send safety and/or CRC information to the ECU 308. The ECU 308 may also inform the ECU 324 of the change through a direct communication link 606 or over the vehicle network (e.g., the CAN 314). The infotainment SoC 328 may confirm the change to the MCU 318 with a cluster error signal' sent over a link 608.

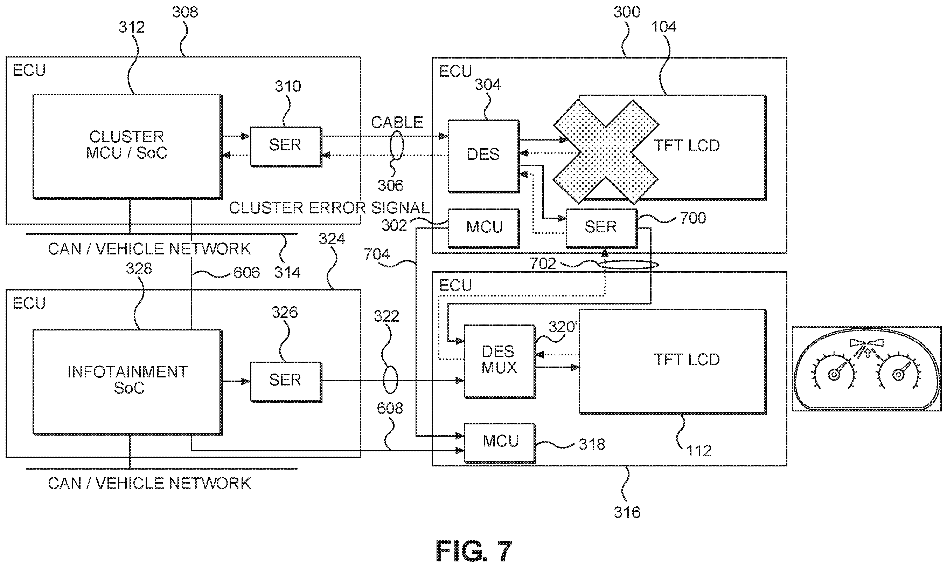

An alternate technique is to route the cluster data from the ECU 300 to the ECU 316 through a serializer/deserializer 700 and cable 702 as illustrated in Figure 7. The MCU 302 may alert the MCU 318 that there is an error and that the change is forthcoming with a cluster error signal sent over a connection 704. Likewise, safety and/or CRC information may be sent from the ECU 316 to the ECU 300. Note that this aspect only works if the point of failure in the ECU 300 is in the instrument cluster display 104, because the cable 306, the serializer/deserializer 304 and the serializer/deserializer 310 still have to be operational for the ECU 300 to have the data to send to the ECU 316.

While not illustrated, another possibility would be to route the cluster error signal from the cluster SoC 312 to the infotainment SoC 328 and also send the cluster data from the cluster SoC 312 to the infotainment SoC 328, and allow the infotainment SoC 328 to send the cluster data to the ECU 316 through the cable 322. Such an arrangement may impose an additional burden on the vehicle network or require additional serializer/deserializers to allow the coupling between the cluster SoC 312 and the infotainment SoC 328.

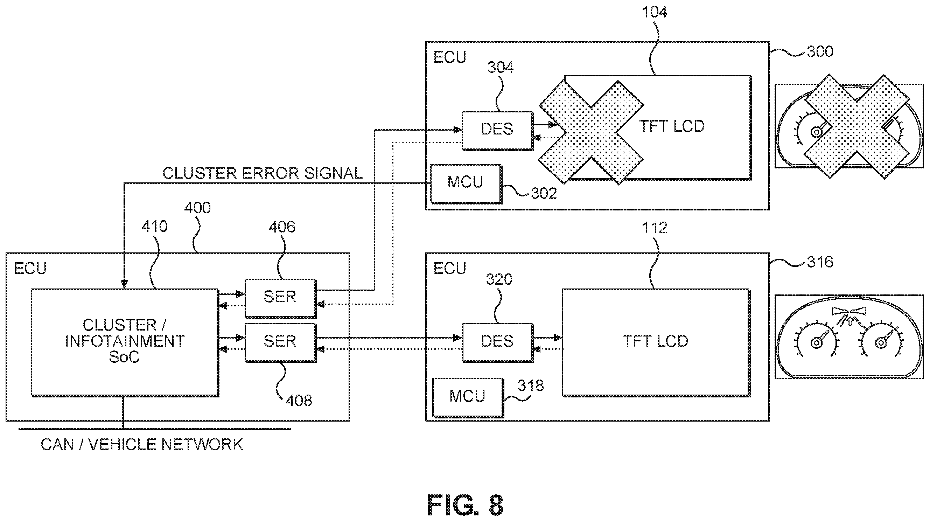

If there is a single SoC such as the cluster/infotainment SoC 410 that serves both the ECU 300 and the ECU 316, then the signaling is simplified as illustrated in Figure 8. Once the heartbeat signal is lost or other cluster error signal is sent from the MCU 302 to the cluster/infotainment SoC 410, the cluster/infotainment SoC 410 uses the serializer/deserializer 408 to send data to the ECU 316 for the second display 112 to present the cluster data. Again, the ECU 316 may send safety or other CRC data back to the ECU 400.

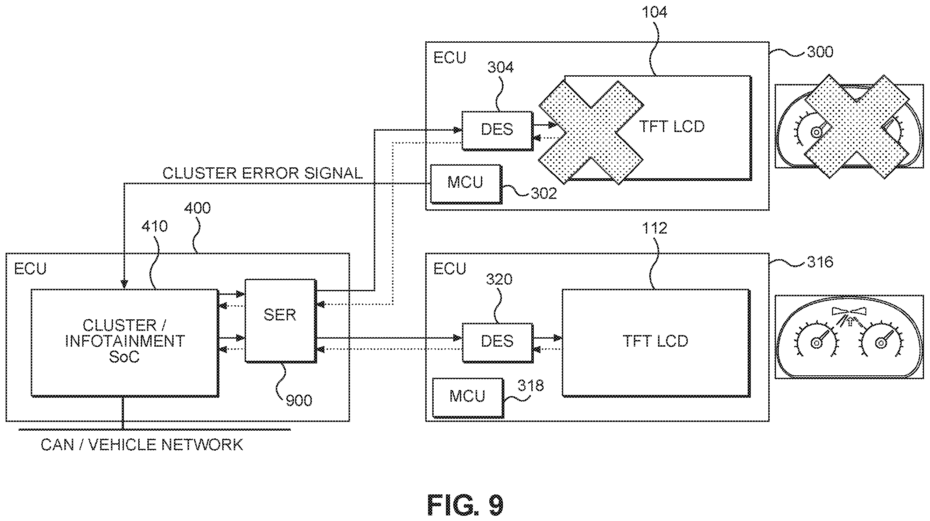

As another alternative, the ECU 400 may include a serializer 900 that is capable of providing two (or more) outputs and broadcast the data from the single serializer 900 to both the ECU 300 and the ECU 316 as illustrated in Figure 9. Once the heartbeat signal is lost or other cluster error signal is sent from the MCU 302 to the cluster/infotainment SoC 410, the cluster/infotainment SoC 410 uses the serializer 900 to send data to the ECU 316.

As alluded to above, while Figures 6-9 refer to a second display in the ECU 316, the data may be sent to any of the secondary displays.

Likewise, it need not be pre-empted completely that data is otherwise provided through the secondary display. There are various ways the telltale data may be added to the content being presented on the secondary display. Such display stacking techniques are explored in co-owned U.S. Provisional Patent Application Serial No. 62/624,780, filed January 31, 2018 and entitled "DRIVING MULTIPLE DISPLAYS WITH A SINGLE DISPLAY PORT," which is hereby incorporated by reference in its entirety.

Those of skill in the art will further appreciate that the various illustrative logical blocks, modules, circuits, and algorithms described in connection with the aspects disclosed herein may be implemented as electronic hardware, instructions stored in memory or in another computer readable medium and executed by a processor or other processing device, or combinations of both. The devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The aspects disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flowchart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. A method for controlling displays in a vehicle, comprising:
sending data from a first controller to a cluster display embedded control unit, ECU, (300) of a vehicle for display on a cluster display (104) within the cluster display ECU;
sending second data from a second controller to a secondary display (112);
detecting a fault associated with the cluster display ECU of the vehicle or a communication path from the first controller to the cluster display ECU;
sending, from the first controller, cluster display information including at least one telltale to the secondary display (112) in the vehicle without sending the information to the second controller; and
presenting the at least one telltale through the secondary display (112).

2. The method of claim 1, further comprising generating an alert on detection of the fault.

3. The method of claim 2, wherein the alert comprises an audible alert.

4. The method of claim 1, wherein detecting the fault comprises detecting corruption in a signal.

5. The method of claim 1, wherein detecting the fault comprises detecting a line fault error.

6. The method of claim 1, wherein detecting the fault comprises detecting a blown fuse.

7. The method of claim 1, wherein detecting the fault comprises determining that a heartbeat signal has failed.

8. The method of claim 1, wherein sending the cluster display information to the secondary display comprises sending the cluster display information through the cluster display ECU.

9. The method of claim 1, wherein the cluster display information comprises pixel data.

10. The method of claim 1, wherein the cluster display information comprises video data.

11. The method of claim 1, wherein sending the cluster display information comprises sending the cluster display information through a cable extending between a cluster control ECU and a second display ECU having the secondary display.

12. The method of claim 1, wherein sending the cluster display information to the secondary display comprises sending the cluster display information to a mobile terminal.

13. The method of claim 1, wherein sending the cluster display information to the secondary display further comprises sending the cluster display information to a plurality of secondary displays.

## Patentansprüche

1. Ein Verfahren zum Steuern von Displays in einem Fahrzeug, aufweisend:
Senden von Daten von einer ersten Steuereinrichtung an eine Cluster-Display-Eingebettete-Steuereinheit (Embedded Control Unit bzw. ECU) (300) eines Fahrzeugs für die Anzeige an einem Cluster-Display (104) innerhalb der Cluster-Display-ECU,
Senden von zweiten Daten von einer zweiten Steuereinrichtung an ein sekundäres Display (112),
Erfassen eines Fehlers, der mit der Cluster-Display-ECU des Fahrzeugs oder einem Kommunikationspfad von der ersten Steuereinrichtung zu der Cluster-Display-ECU assoziiert ist,
Senden, von der ersten Steuereinrichtung, von Cluster-Display-Informationen einschließlich wenigstens eines Hinweises an das sekundäre Display (112) in dem Fahrzeug, ohne die Informationen an die zweite Steuereinrichtung zu senden, und
Präsentieren des wenigstens einen Hinweises über das sekundäre Display (112).

2. Verfahren nach Anspruch 1, das weiterhin das Generieren einer Warnung beim Erfassen des Fehlers aufweist.

3. Verfahren nach Anspruch 2, wobei die Warnung eine hörbare Warnung aufweist.

4. Verfahren nach Anspruch 1, wobei das Erfassen des Fehlers das Erfassen einer Korrumpierung in einem Signal aufweist.

5. Verfahren nach Anspruch 1, wobei das Erfassen des Fehlers das Erfassen eines Leitungsausfallfehlers aufweist.

6. Verfahren nach Anspruch 1, wobei das Erfassen des Fehlers das Erfassen einer durchgebrannten Sicherung aufweist.

7. Verfahren nach Anspruch 1, wobei das Erfassen des Fehlers das Bestimmen, dass ein Heartbeat-Signal fehlgeschlagen ist, aufweist.

8. Verfahren nach Anspruch 1, wobei das Senden der Cluster-Display-Informationen an das sekundäre Display das Senden der Cluster-Display-Informationen über die Cluster-Display-ECU aufweist.

9. Verfahren nach Anspruch 1, wobei die Cluster-Display-Informationen Pixeldaten aufweisen.

10. Verfahren nach Anspruch 1, wobei die Cluster-Display-Informationen Videodaten aufweisen.

11. Verfahren nach Anspruch 1, wobei das Senden der Cluster-Display-Informationen das Senden der Cluster-Display-Informationen über ein Kabel, das sich zwischen einer Cluster-Steuer-ECU und einer zweiten Display-ECU mit dem sekundären Display erstreckt, aufweist.

12. Verfahren nach Anspruch 1, wobei das Senden der Cluster-Display-Informationen an das sekundäre Display das Senden der Cluster-Display-Informationen an ein Mobilendgerät aufweist.

13. Verfahren nach Anspruch 1, wobei das Senden der Cluster-Display-Informationen an das sekundäre Display weiterhin das Senden der Cluster-Display-Informationen an eine Vielzahl von sekundären Displays aufweist.

## Revendications

1. Un procédé de commande d'affichages dans un véhicule, comprenant :
l'envoi de données d'un premier contrôleur à une unité de commande intégrée, ECU, d'affichage de groupe, (300) d'un véhicule pour affichage sur un affichage de groupe (104) dans l'ECU d'affichage de groupe ;
l'envoi de secondes données d'un deuxième contrôleur à un affichage secondaire (112) ;
la détection d'une défaillance associée à l'ECU d'affichage du groupe du véhicule ou à un chemin de communication du premier contrôleur à l'ECU d'affichage du groupe ;
l'envoi, à partir du premier contrôleur, d'informations d'affichage de groupe comprenant au moins un témoin à l'affichage secondaire (112) dans le véhicule, sans envoyer les informations au deuxième contrôleur ; et
la présentation de l'au moins un témoin par le biais de l'affichage secondaire (112).

2. Le procédé selon la revendication 1, comprenant en outre la génération d'une alerte lors de la détection de la défaillance.

3. Le procédé selon la revendication 2, dans lequel l'alerte comprend une alerte sonore.

4. Le procédé de la revendication 1, dans lequel la détection de la défaillance comprend la détection d'une altération dans un signal.

5. Le procédé selon la revendication 1, dans lequel la détection de la défaillance comprend la détection d'une erreur de défaillance de ligne.

6. Le procédé de la revendication 1, dans lequel la détection de la défaillance comprend la détection d'un fusible grillé.

7. Le procédé selon la revendication 1, dans lequel la détection de la défaillance comprend la détermination qu'un signal de pulsation est défaillant.

8. Le procédé selon la revendication 1, dans lequel l'envoi des informations d'affichage du groupe à l'affichage secondaire comprend l'envoi des informations d'affichage du groupe par l'intermédiaire de l'ECU d'affichage du groupe.

9. Le procédé de la revendication 1, dans lequel les informations d'affichage de groupe comprennent des données de pixels.

10. Le procédé de la revendication 1, dans lequel les informations d'affichage de groupe comprennent des données vidéo.

11. Le procédé de la revendication 1, dans lequel l'envoi des informations d'affichage du groupe comprend l'envoi des informations d'affichage du groupe par un câble s'étendant entre une ECU de groupe et une deuxième ECU d'affichage ayant l'affichage secondaire.

12. Le procédé de la revendication 1, dans lequel l'envoi des informations d'affichage de groupe à l'affichage secondaire comprend l'envoi des informations d'affichage de groupe à un terminal mobile

13. Le procédé de la revendication 1, dans lequel l'envoi des informations d'affichage de groupe à l'affichage secondaire comprend en outre l'envoi des informations d'affichage de groupe à une pluralité d'affichages secondaires.
